# EUROPEAN PATENT SPECIFICATION

(11) **EP 2 287 953 B1**
(45) Date of publication and mention of the grant of the patent: **25.09.2013**
(21) Application number: 10173518.1
(22) Date of filing: 20.08.2010
(51) Int. Cl.: H01M 8/04, H01M 8/10

(54) **Fuel cell system**
Brennstoffzellensystem
Système de pile à combustible

(30) Priority: 21.08.2009 JP 2009191785
(43) Date of publication of application: 23.02.2011
(73) Proprietor: Honda Motor Co., Ltd., Tokyo 107-8556 (JP)
(72) Inventor: Ogawa, Jumpei, Saitama 351-0193 (JP); Wake, Chihiro, Saitama 351-0193 (JP)
(74) Representative: Trossin, Hans-Jürgen

(56) References cited:
- JP-A- 2005 259 440
- JP-A- 2007 035 369
- JP-A- 2007 035 464
- JP-A- 2008 097 993

## Description

### FIELD OF THE INVENTION

The present invention relates to a fuel cell system.

### DESCRIPTION OF THE RELATED ART

According to a well known fuel cell equipped on vehicles, for example, a membrane electrode assembly is created by flanking a solid polymer electrolyte membrane from both sides with an anode electrode and a cathode electrode, a tabular unitary fuel cell (hereinafter referred to as a unit cell) is created by placing a pair of separators on both sides of the membrane electrode assembly, and a fuel cell stack (hereinafter referred to as a fuel cell) is created by stacking a plurality of unit cells. According to such a fuel cell, a hydrogen gas is supplied as an anode gas (fuel gas) between the anode electrode and the separator. At the same time, air is supplied as a cathode gas (oxidant gas) between the cathode electrode and the separator. As a result, a hydrogen ion, created by a catalytic reaction at the anode electrode, moves to the cathode electrode by passing through the solid polymer electrolyte membrane, conducts an electrochemical reaction at the cathode electrode with oxygen in the air, and thereby generates electricity. In accordance with this electric power generation, water is created inside the fuel cell.

When a fuel cell system comprising such a fuel cell is used, for example, at an environment below freezing point, water that was generated and is still remaining inside the fuel cell system may freeze while the fuel cell system is not operating. In this case, technology for removing the water inside the fuel cell system has been suggested (see, for example, Japanese Unexamined Patent Application, First Publication, No. 2004-335240 (hereinafter referred to as "Patent Document 1") and Japanese Unexamined Patent Application, First Publication, No. 2007-242326 (hereinafter referred to as "Patent Document 2")).

According to a fuel cell system disclosed in Patent Document 1, when the fuel cell system is not operating, a control is performed so that an air, which was introduced through an air introduction path in a direction opposite to a direction of pure water when the fuel cell system is operating normally, is supplied into a pure water circulation path. As a result, according to this fuel cell system, it is possible to remove the pure water remaining inside the fuel cell stack, pure water pump, foreign object filter, ion filter, and the pure water circulation path with more reliability, compared to a case in which pure water is removed by driving a pump, for instance. In addition, it is possible to prevent damage such as operational malfunctions and breakage due to the freezing and expansion of the pure water, with more reliability.

According to a fuel cell system disclosed in Patent Document 2, a sewer valve is provided to a water supplying system connected with a water tank. When water is discharged from the sewer valve, the pressure inside the water tank is increased by a tank pressure elevating unit. As a result of the increased pressure inside the water tank, the water inside the water supplying system is swiftly and reliably discharged from the sewer valve. Consequently, the water supplying system is prevented from freezing in cold climates while the fuel cell system is not operating.

The fuel cell systems disclosed in Patent Documents 1 and 2 relate to technology removing pure water used for adding moisture to the solid polymer electrolyte membrane included in the fuel cell and to perform an adjustment of the temperature. In other words, the fuel cell systems disclosed in Patent Documents 1 and 2 do not relate to technology for preventing generated water remaining inside the fuel cell system from freezing while the fuel cell system is not operating. When such generated water freezes, there is a possibility that an anode gas, remaining inside a flow path in the anode side while the fuel cell system is not operating, cannot be substituted with fresh air (cathode gas) in a scavenging processing.

JP 2007 035 369 A discloses a fuel cell system in accordance with the preamble of claim 1. When the freeze estimation unit estimates a freezing, the blowdown valve is closed. The blowdown valve is then opened after a predetermined amount of time has passed since the blowdown valve closed, during which a pressure inside the anode gas circulation is decreased, thereby moving a moisture inside the anode gas circulation path in a direction towards the fuel cell.

JP 2005 259440 A discloses a fuel cell system having a cathode gas compressor which makes air flowing to the air passage and hydrogen passage to stop generation of electricity. The compressor is operable in one direction only.

### SUMMARY OF THE INVENTION

The present invention is made considering the problems described above. Accordingly, an object of the present invention is to provide a fuel cell system which can prevent the anode gas flow path from freezing, and can perform a scavenging process with reliability.

The invention provides a fuel cell system in accordance with claim 1.
(1) Namely, a fuel cell system according to the present invention comprises: an anode gas circulation path comprising an anode gas supplying path and an anode gas ejection path, an anode gas flowing through the anode gas supplying path and the anode gas ejection path; a fuel cell generating electricity by receiving a supply of the anode gas through the anode gas supplying path; a blowdown valve provided in the anode gas ejection path; and a control unit controlling the blowdown valve. Here, the control unit comprises a freeze estimation unit estimating whether the anode gas circulation path is likely to freeze, a pressure reduction unit reducing a pressure of the anode gas circulation path, and a pressure condition confirmation unit confirming a pressure of the anode gas circulation path. When the freeze estimation unit estimates a freezing when the fuel cell stops generating electricity, the blowdown valve is closed, a pressure of the anode gas circulation path is reduced by the pressure reduction unit, and, the blowdown valve is opened after the pressure condition confirmation unit confirms that a pressure of the anode gas circulation path reaches a predetermined pressure less than an atmospheric pressure. Thus, a moisture is moved inside the anode gas circulation path in a direction towards the fuel cell.
(2) In addition, the fuel cell system may be configured as follows: the pressure reduction unit uses an electric power acquisition equipment, the electric power acquisition equipment acquiring an electric output from the fuel cell.
(3) In addition, the fuel cell system is configured as follows: the pressure reduction unit drives a cathode gas supplying pump in a backspin direction, the cathode gas supplying pump being connected to the anode gas circulation path.

According to the fuel cell system described in (1) above, when the fuel cell stops generating electricity, the interior of the anode gas flow path is maintained to be at a negative pressure state. In addition, a blowdown valve is opened before water such as generated water remaining inside the anode gas flow path is frozen. Thus, air is pulled into the anode gas flow path from outside the fuel cell system. Due to this air flow, water inside the anode gas flow path can be moved toward a side of the fuel cell. In other words, since water that was remaining near the blowdown valve is removed, water can be prevented from freezing near the blowdown valve. Hence, a subsequent scavenging process, through which the interior of the anode gas flow path is replaced with air, can be performed reliably.

According to the fuel cell system described in (2) above, an electric power acquisition equipment is used according to an instruction from a pressure reduction unit. As a result, it is possible to consume the anode gas remaining inside the anode gas flow path. Therefore, the pressure inside the anode gas flow path can be reliably reduced. Thus, a preparation for preventing the freezing of water, for instance, may be made appropriately.

According to the fuel cell system described in (3) above, a cathode gas supplying pump is generally branch connected to the anode gas flow path in order to perform a scavenging process of the anode gas flow path. Therefore, by operating the cathode gas supplying pump in a backspin direction according to an instruction by the pressure reduction unit, anode gas and the like inside the anode gas flow path may be ejected outside the fuel cell system. Therefore, the pressure inside the anode gas flow path may be reduced reliably. Thus, a preparation for preventing the freezing of water, for instance, may be made appropriately.

### BRIEF DESCRIPTION OF THE DRAWINGS

FIG. 1 is a configuration diagram of a fuel cell system according to an aspect of the present invention.
FIG. 2 is a block diagram of a control device according to an aspect of the present invention.
FIG. 3 is a flow chart indicating a method preventing a freezing of a fuel cell system according to an aspect of the present invention.
FIG. 4 is a time chart illustrating a timing of an opening and closing operating of each valve while preventing a freezing of a fuel cell system according to an aspect of the present invention.
FIG. 5 is a flow chart indicating a method preventing a freezing of a fuel cell system according to a second embodiment of the present invention.
FIG. 6 is a graph showing a relation between a pressure inside a circulation pipe and time according to a second embodiment of the present invention.

### DETAILED DESCRIPTION OF THE PREFERRED EMBODIMENTS

### (First Embodiment)

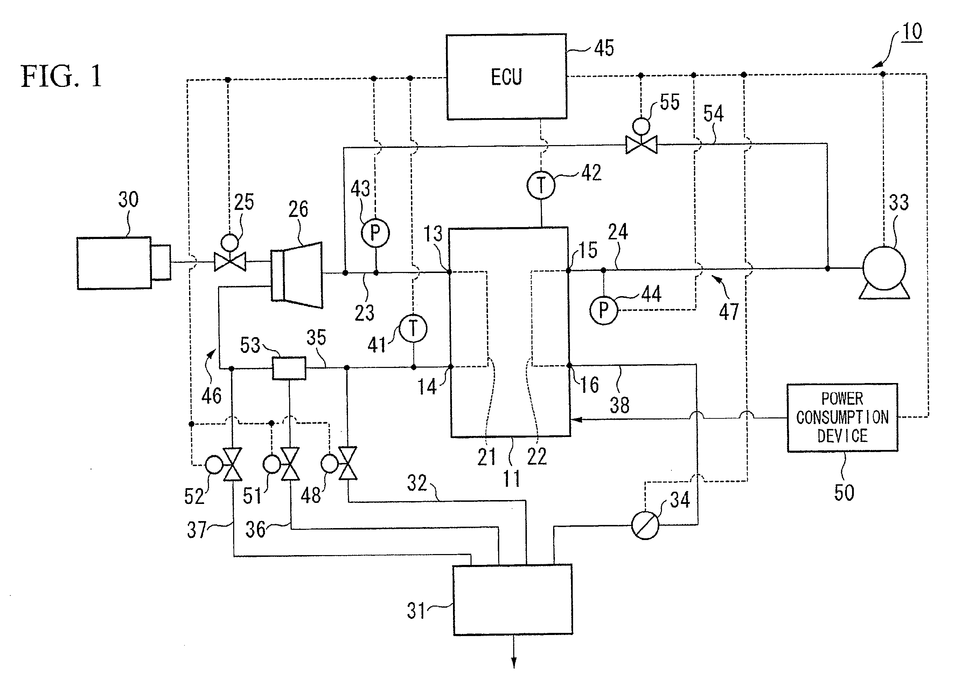

Hereunder, a first embodiment of the present invention is described with reference to FIGS. 1 - 4. The present embodiment is described under the assumption that a fuel cell system is equipped on a vehicle.

FIG. 1 is a configuration diagram of a fuel cell system according to the present invention. As shown in FIG. 1, a fuel cell 11 of a fuel cell system 10 is a solid polymer membrane type fuel cell which generates electricity based on an electrochemical reaction between an anode gas such as hydrogen and a cathode gas such as air. An anode gas supplying tube 23 is connected to an anode gas supplying communication hole 13 formed on the fuel cell 11 (at an entrance side of an anode gas flow path 21). A hydrogen tank 30 is connected to an end part of an upper stream of the anode gas supplying tube 23. Further, a cathode gas supplying tube 24 is connected to a cathode gas supplying communication hole 15 formed on the fuel cell 11 (at an entrance side of a cathode gas flow path 22). An air compressor 33 is connected to an end part of an upper stream of the cathode gas supplying tube 24. Further, an anode offgas discharge pipe 35 is connected to an anode offgas discharging communication hole 14 formed on the fuel cell 11 (at an outlet side of the anode gas flow path 21). In addition, a cathode offgas discharge pipe 38 is connected to a cathode offgas discharging communication hole 16 (at an outlet side of the cathode gas flow path 22). Here, an anode gas circulation pipe 46 comprises the anode gas supplying tube 23 and the anode offgas discharge pipe 35. In addition, a cathode gas flow path 47 comprises a cathode gas supplying tube 24 and a cathode offgas discharge pipe 38.

Further, hydrogen gas provided from the hydrogen tank 30 to the anode gas supplying tube 23 is depressurized by a regulator (not diagramed), then passes through an ejector 26, and is supplied to the anode gas flow path 21 of the fuel cell 11. Further, an electromagnetic-driving type electromagnetic valve 25 is provided near a lower stream side of the hydrogen tank 30. In this way, a configuration is made to shield a supply of hydrogen gas from the hydrogen tank 30.

In addition, the anode offgas discharge pipe 35 is connected to the ejector 26. Thus, a configuration is made so that an anode offgas which passed through the fuel cell 11 and was ejected may be reused as an anode gas of the fuel cell 11. Furthermore, three pipes are provided partway through the anode offgas discharge pipe 35 while being branched out. Namely, a drain ejection pipe 36, a purge gas ejection pipe 37, and a scavenging gas discharge pipe 32 are provided. The drain ejection pipe 36 ejects the water (i.e., drain) generated by the fuel cell 11. The purge gas ejection pipe 37 ejects gas (i.e., offgas) inside the pipe in order to maintain the hydrogen concentration inside the anode pipe at an appropriate level. The scavenging gas discharge pipe 32 discharges a scavenging gas (i.e., air) when a scavenging process is performed while the fuel cell 11 is not operating.

The drain ejection pipe 36, the purge gas ejection pipe 37, and the scavenging gas discharge pipe 32 are all connected to a dilution box 31 at a lower stream of each of the drain ejection pipe 36, the purge gas ejection pipe 37, and the scavenging gas discharge pipe 32. An electromagnetic-driving type drain valve 51 is provided on the drain ejection pipe 36. An electromagnetic-driving type purge valve 52 is provided on the purge gas ejection pipe 37. Further, an electromagnetic-driving type air discharge valve 48 is provided on the scavenging gas discharge pipe 32. Further, the diameter of the purge gas ejection pipe 37 is larger than the diameter of the drain ejection pipe 36. In addition, the diameter of the scavenging gas discharge pipe 32 is larger than the diameter of the purge gas ejection pipe 37. Further, a catch tank 53 is provided at a branching point between the anode offgas discharge pipe 35 and the drain ejection pipe 36 as a gas-liquid separator.

Next, air (cathode gas) is compressed by the air compressor 33. After the air passes through the cathode gas supplying tube 24, the air is supplied to the cathode gas flow path 22 of the fuel cell 11. After oxygen in the air is used in electric power generation as an oxidant, the oxygen is discharged to the cathode offgas discharge pipe 38 from the fuel cell 11 as a cathode offgas. The cathode offgas discharge pipe 38 is connected to a dilution box 31. Thereafter, a discharge is made outside the vehicle. Incidentally, the cathode offgas discharge pipe 38 comprises a back pressure valve 34. The air compressor 33 according to the present embodiment is configured so that a backspin is possible. In other words, by backspinning the air compressor 33, gas in each of the pipes can be discharged to an upper stream side. Thus, the pressure inside the pipe can be reduced. In addition, a configuration is possible in which a humidifier (not diagrammed) is bridged between the cathode gas supplying tube 24 and the cathode offgas discharge pipe 38 so that the cathode gas is humidified by the movement of moisture included in the cathode offgas.

Further, the cathode gas supplying tube 24 connecting the air compressor 33 and the fuel cell 11 is configured so that the pipe is branched, and an end of a scavenging gas injection pipe 54 is connected. The other end of the scavenging gas injection pipe 54 is connected between the fuel cell 11 and the ejector 26 of the anode gas supplying tube 23. In other words, the air supercharged by the air compressor 33 can be supplied to the anode gas circulation pipe 46 and the anode gas flow path 21 of the fuel cell 11. Incidentally, an electromagnetic driving type electromagnetic valve 55 is provided on the scavenging gas injection pipe 54. Thus, a configuration is made so that the supply of air from the air compressor 33 can be shielded.

Here, a temperature sensor 41 is provided immediately adjacent to (the lower stream side of) the anode offgas discharging communication hole 14 of the anode offgas discharge pipe 35. In addition, a temperature sensor 42 is provided to the fuel cell 11 as well. For example, by averaging the temperature detected by the temperature sensor 41 and the temperature sensor 42, it is possible to detect a temperature which is approximately the same as the temperature of the interior of the fuel cell 11. The detection result (i.e., a sensor output) of the temperature sensor 41 and the temperature sensor 42 is transmitted to a control device (i.e., an ECU) 45. Thus, a configuration is made so that it is determined whether or not each type of control (described later) can be carried out, based on the detection result.

Furthermore, a pressure sensor 43 is provided in the anode gas supplying tube 23. The pressure sensor 43 detects an in-tube gas pressure. The pressure sensor 43 is provided between the anode gas supplying communication hole 13 of the fuel cell 11 and a converging point of the anode gas supplying tube 23 and the scavenging gas injection pipe 54. A pressure sensor 44 is provided in the cathode gas supplying tube 24. The pressure sensor 44 also detects an in-tube gas pressure. The pressure sensor 44 is provided between the anode gas circulation pipe 46 and the cathode gas supplying communication hole 15 of the fuel cell 11.

Further, a configuration is made so that the electric power (electric current) generated by the fuel cell 11 is supplied to an electric power consumption device 50 such as a motor and an electric heater. In other words, the electric power consumption device 50 is configured as an electric power acquisition equipment.

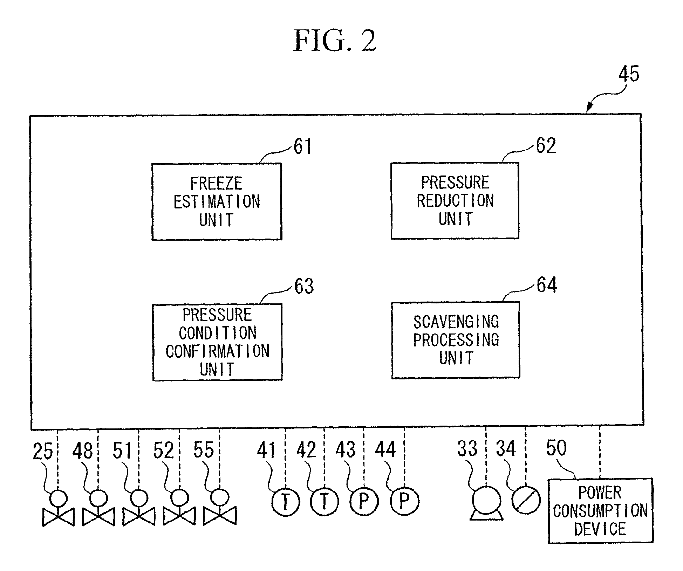

FIG. 2 is a block diagram of the control device 45. As indicated in FIG. 2, the control device 45 comprises a freeze estimation unit 61 which determines whether or not the fuel cell system 10 may freeze, a pressure reduction unit 62 which reduces the pressure inside the anode gas circulation pipe 46, a pressure condition confirmation unit 63 which confirms the pressure inside the anode gas circulation pipe 46, and a scavenging processing unit 64 which performs a scavenging process while the fuel cell 11 is not operating.

In addition, a control device 45 is configured so that, according to an output required by the fuel cell 11, the electromagnetic valve 25 is controlled, and a predetermined amount of hydrogen gas is supplied to the fuel cell 11 from the hydrogen tank 30. Further, according to an output required by the fuel cell 11, the control device 45 drives the air compressor 33, thus supplying a predetermined amount of air to the fuel cell 11, and thereby controlling the back pressure valve 34 so as to adjust the supplying pressure of the air supplied to the cathode gas flow path 22.

### [Method Preventing a Fuel Cell System from Freezing]

Next, a method preventing a freezing of a fuel cell system 10 according to the present embodiment is described.

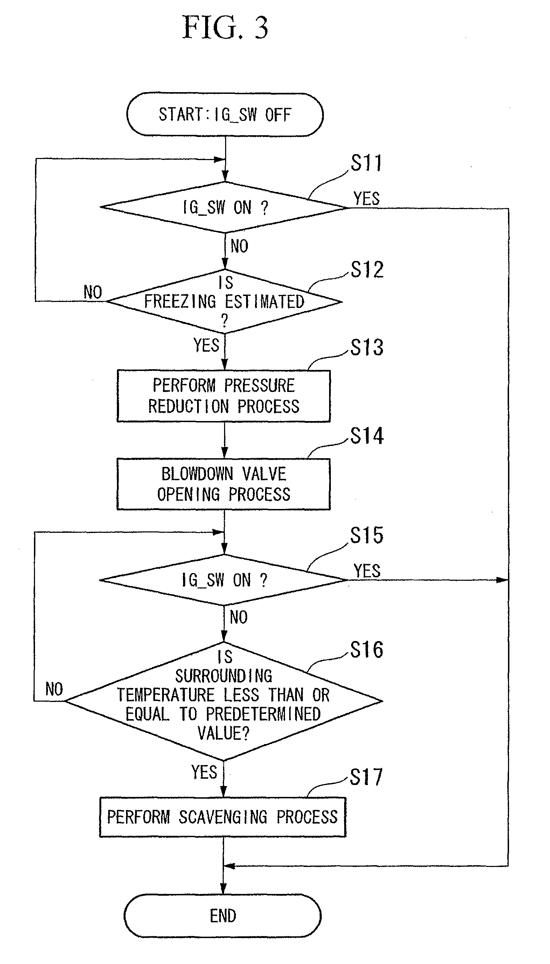

FIG. 3 is a flow chart illustrating a method preventing a freezing of a fuel cell system 10.

As indicated in FIG. 3, the flow chart starts from a condition in which an ignition switch (not diagrammed) is turned off. The ignition switch is a seizing signal of the fuel cell system 10.

In step S11, it is determined whether or not the ignition switch has been turned on. When the ignition switch is turned on, the procedure ends. When the ignition switch is still turned off, the procedure moves on to step S12.

In step S12, the freeze estimation unit 61 of the control device 45 determines whether or not the fuel cell system 10 may freeze. When it is determined that the fuel cell system 10 may freeze, the procedure moves on to step S13. When it is determined that there is no possibility of the cell system 10 freezing, the procedure moves back to step S11. In particular, the freeze estimation unit 61 is configured so that a temperature is detected from the temperature sensor 41 and the temperature sensor 42, and when the temperature is less than or equal to a predetermined threshold temperature, the freeze estimation unit 61 determines that there is a possibility of freezing.

In step S13, a procedure is performed to reduce the in-pipe pressure of the fuel cell system 10 and the pressure inside the fuel cell 11. In particular, based on an instruction by the pressure reduction unit 62 of the control device 45, the electromagnetic valve 25, the air discharge valve 48, the drain valve 51, and the purge valve 52 are closed. At the same time, the electromagnetic valve 55 is opened. In this condition, the air compressor 33 is driven in a direction of a backspin. Thus, gas inside the anode gas circulation pipe 46 is discharged, and a pressure inside the anode gas circulation pipe 46 is reduced.

In step S14, the pressure of the anode gas circulation pipe 46 is confirmed at the pressure sensor 43 according to an instruction by the pressure condition confirmation unit 63 of the control device 45. At this time, the air compressor 33 remains driven, and the pressure of the anode gas circulation pipe 46 is gradually reduced. Then, at a stage in which the pressure of the anode gas circulation pipe 46 is lower than a predetermined pressure less than an atmospheric pressure, the electromagnetic valve 55 is closed, and a setting is made so that the anode gas circulation pipe 46 is sealed under a negative pressure condition. This predetermined pressure is determined in advance based on experiments and the like as a value at which a movement of water, as described later, is made possible. Further, immediately after the electromagnetic valve 55 is closed, a blowdown valve (such as a purge valve 52) provided on the anode gas circulation pipe 46 is opened. Then, air is blown into the anode gas circulation pipe 46 from outside the fuel cell system 10. As a result of this air flow, moisture such as generated water that was remaining near the purge valve 52 inside the anode gas circulation pipe 46 can be moved towards the fuel cell 11 side. In other words, it is possible to remove water that was remaining near the purge valve 52.

In step S15, it is determined whether or not the ignition switch is turned on. When the ignition switch has been turned on, the procedure is terminated. When the ignition switch is still turned off, the procedure moves on to step S16.

In step S16, it is determined whether or not a temperature of an area surrounding the fuel cell system 10 is less than or equal to a predetermined temperature. When the temperature is less than or equal to the predetermined temperature, the procedure moves on to step S17. When the temperature is higher than the predetermined temperature, the procedure returns to step S15. The predetermined temperature refers to a temperature at which moisture inside the gas remaining in the pipe undergoes a dew formation and freezes. The predetermined temperature is determined in advance based on actual experiments. An example of the predetermined temperature is -10 °C. Here, a setting may be made using the temperature sensor 41 and the temperature sensor 42. In addition, a temperature sensor (not diagrammed) may be provided immediately adjacent to the fuel cell system 10, and a determination may be made based on the detection value of the temperature sensor.

In step S17, the scavenging process of the fuel cell system 10 is executed based on an instruction by the scavenging processing unit 64 of the control device 45. In particular, the electromagnetic valve 25, the drain valve 51, and the purge valve 52 are closed. At the same time, the air ejection valve 48 and the electromagnetic valve 55 are opened. Under this condition, the air compressor 33 is driven, and air is provided to the anode gas circulation pipe 46. After air is supplied to the anode gas circulation pipe 46 for a predetermined amount of time, the driving of the air compressor 33 is halted, and the scavenging process is terminated. Thus, the method preventing the freezing of the fuel cell system 10 is terminated. By performing the scavenging process, the interior of the anode gas circulation pipe 46 and the anode gas flow path 21 may be replaced by air with low moisture such that freezing can be prevented.

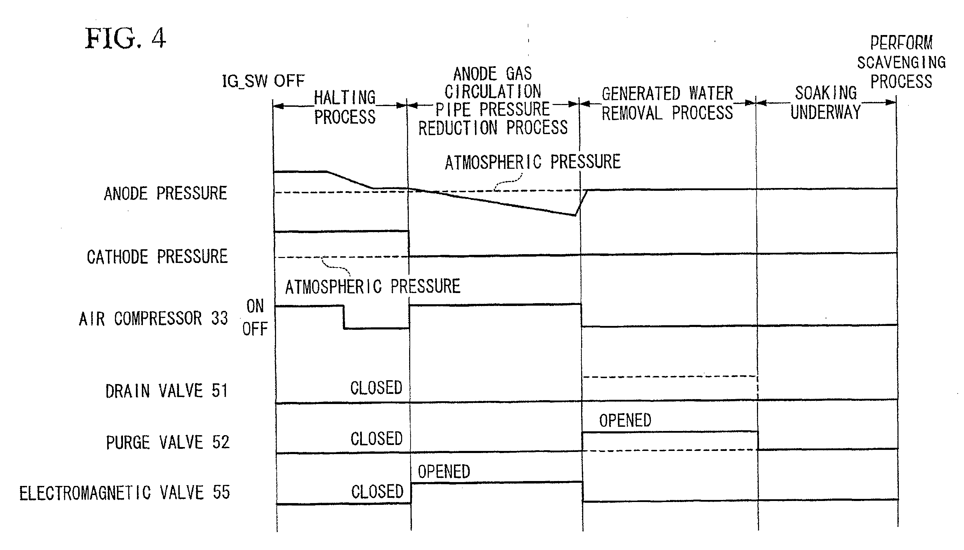

FIG. 4 is a time chart corresponding to the processing flow of the flow chart described above. As indicated in FIG. 4, the anode pressure becomes lower than the atmospheric pressure since a pressure reduction procedure is executed in step S13. The anode pressure increases up to the atmospheric pressure since the purge valve 52 (or the drain valve 51) is opened in step S14. At this time, the purge valve 52 (or the drain valve 51) is opened. As a result, the generated water that was remaining near the purge valve 52 moves towards the fuel cell 11 side together with gas (air).

According to the present embodiment, when the fuel cell 11 stops generating electricity, the interior of the anode gas circulation pipe 46 is maintained at a negative pressure state. Further, the purge valve 52 (or the drain valve 51) is opened before moisture such as generated water remaining inside the anode gas circulation pipe 46 is frozen. As a result, air is pulled into the anode gas circulation pipe 46 from outside the fuel cell system 10. Due to this air flow, moisture inside the anode gas circulation pipe 46 may be moved towards the fuel cell 11 side. In other words, moisture that was remaining near the purge valve 52 (drain valve 51) is removed. As a result, it is possible to prevent moisture from freezing near the purge valve 52 (the drain valve 51). Hence, it is possible to perform the subsequent scavenging process, in which the interior of the anode gas circulation pipe 46 is replaced with air, in a more reliable manner.

In addition, by providing an air compressor 33 which can be backspinned, and by driving the air compressor in the direction of a backspin according to an instruction by the pressure reduction unit 62, the anode gas and the like inside the anode gas circulation pipe 46 can be ejected outside of the fuel cell system 10. Therefore, according to a simple configuration in which an air compressor 33 designed partially differently is employed, the pressure inside the anode gas circulation pipe 46 may be reduced with reliability.

Further, in step S14 of the present embodiment, a configuration is made in which the purge valve 52 is opened, and gas (air) is brought in from the purge gas ejection pipe 37. Meanwhile, another configuration is also possible in which the drain valve 51 is opened, or gas and the generated water may be moved towards the fuel cell 11 side by opening both of the valves 51 and 52.

### (Second Embodiment)

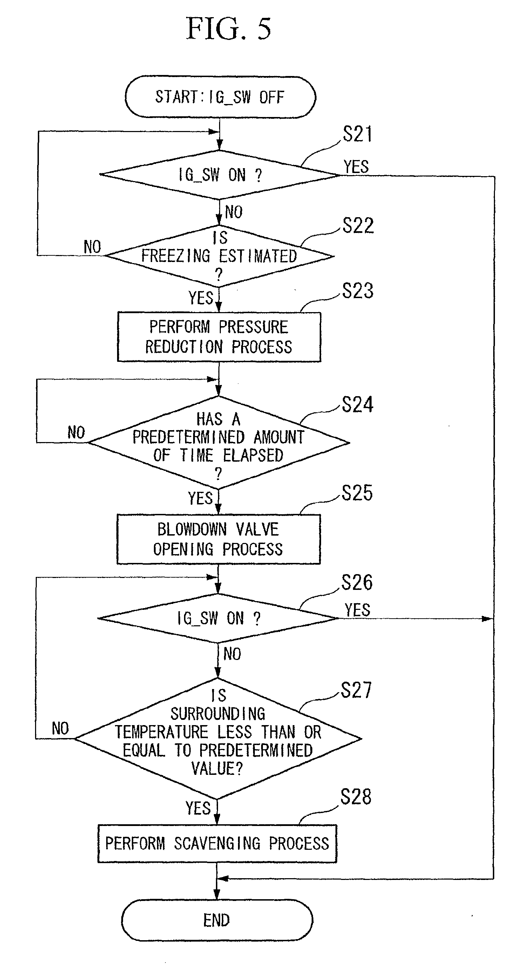

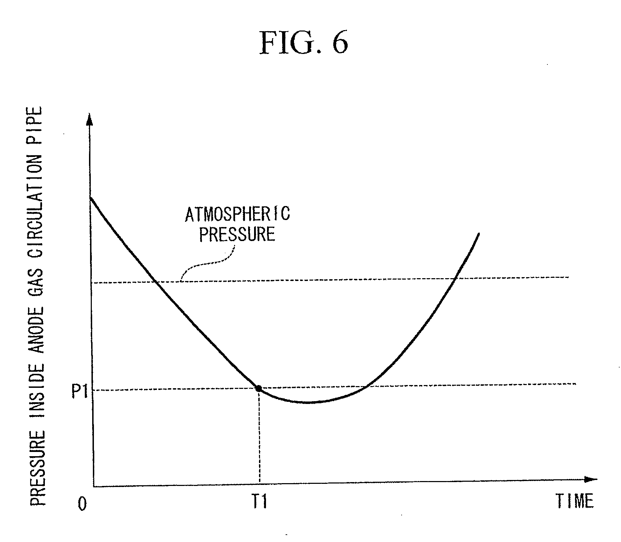

Next, a second embodiment of a fuel cell system according to the present invention is described based on FIGS. 5 and 6. The present second embodiment differs from the first embodiment in that a method preventing the freezing of a fuel cell system is configured differently. The configuration of the fuel cell system is approximately the same as what was described in the first embodiment. Therefore, the same reference numeral is used when describing the same components, and detailed descriptions regarding the overlapping components are omitted.

### (Method Preventing a Freezing of a Fuel Cell System)

Hereinafter, a method preventing a freezing of a fuel cell system 10 according to the present embodiment is described.

FIG. 5 is a flow chart indicating a method preventing a freezing of a fuel cell system 10.

As shown in FIG. 5, the flow chart starts from a condition in which the ignition switch (not diagrammed), which is a seizing signal of the fuel cell system 10, is turned off.

In step S21, it is determined whether or not an ignition switch has been turned on. When the ignition switch is turned on, the procedure is terminated. When the ignition switch is still turned off, the procedure moves on to step S22.

In step S22, the freeze estimation unit 61 of the control device 45 determines whether or not this is a possibility that the fuel cell system 10 will freeze. When it is estimated that the fuel cell system 10 may freeze, the procedure moves on to step S23. When it is determined that there is no possibility of the fuel cell system 10 freezing, the procedure moves back to step S21. In particular, the freeze estimation unit 61 is configured so that a temperature is detected from the temperature sensor 41 and the temperature sensor 42, and when the temperature is less than or equal to a predetermined threshold temperature, the freeze estimation unit 61 determines that there is a possibility of freezing.

In step S23, a procedure is performed to reduce the in-pipe pressure of the fuel cell system 10 and the pressure inside the fuel cell 11. In particular, based on an instruction by the pressure reduction unit 62 of the control device 45, the electromagnetic valve 25, the air discharge valve 48, the drain valve 51, the purge valve 52, and the electromagnetic valve 55 are closed. In other words, a setting is made so that the anode gas circulation pipe 46 is maintained in a sealed condition.

In step S24, it is determined whether or not a predetermined amount of time has passed since the anode gas circulation pipe 46 became a sealed condition. When a predetermined amount of time has passed, the procedure moves on to step S25. When a predetermined amount of time has not yet passed, the step S24 is repeated. Incidentally, the pressure of the anode gas circulation pipe 46 and the elapsed time are related as shown in FIG. 6. In other words, when the anode gas circulation pipe 46 is in a sealed condition, it is observed that the pressure inside the anode gas circulation pipe 46 decreases as time elapses. Therefore, a time T1 required to reach a pressure P1 (PI is less than the atmospheric pressure) which is suitable for removing generated water from the anode gas circulation pipe 46 is set to be a predetermined amount of time. Here, the pressure of the anode gas circulation pipe 46 is confirmed by the pressure sensor 43 based on an instruction by the pressure condition confirmation unit.

In step S25, since a predetermined amount of time has passed in step S24, the blowdown valve (for example, the purge valve 52) provided on the anode gas circulation pipe 46 is opened. Then, since the anode gas circulation pipe 46 is in a state of negative pressure, air is pulled into the anode gas circulation pipe 46 from outside the fuel cell system 10. Due to this air flow, moisture such as generated water that has remained near the purge valve 52 of the anode gas circulation pipe 46 may be moved towards the fuel cell 11 side. In other words, it is possible to remove the moisture that has been remaining near the purge valve 52.

In step S26, it is determined whether or not the ignition switch has been turned on. When the ignition switch has been turned on, the process is terminated. When the ignition switch remains to be turned off, the process moves on to step S27.

In step S27, it is determined whether or not a temperature of an area surrounding the fuel cell system 10 is less than or equal to a predetermined temperature. When the temperature is less than or equal to the predetermined temperature, the procedure moves on to step S28. When the temperature is higher than the predetermined temperature, the procedure returns to step S26. The predetermined temperature refers to a temperature at which moisture inside the gas remaining in the pipe undergoes a dew formation and freezes. The predetermined temperature is determined in advance based on actual experiments. An example of the predetermined temperature is -10 °C. Here, a setting may be made using the temperature sensor 41 and the temperature sensor 42. In addition, a temperature sensor (not diagrammed) may be provided immediately adjacent to the fuel cell system 10, and a determination may be made based on the detection value of the temperature sensor.

In step S28, the scavenging process of the fuel cell system 10 is executed based on an instruction by the scavenging processing unit 64 of the control device 45. In particular, the electromagnetic valve 25, the drain valve 51, and the purge valve 52 are closed. At the same time, the air ejection valve 48 and the electromagnetic valve 55 are opened. Under this condition, the air compressor 33 is driven, and air is provided to the anode gas circulation pipe 46. After air is supplied to the anode gas circulation pipe 46 for a predetermined amount of time, the driving of the air compressor 33 is halted, and the scavenging process is terminated. Thus, the method preventing the freezing of the fuel cell system 10 is terminated. By performing the scavenging process, the interior of the anode gas circulation pipe 46 and the anode gas flow path 21 may be replaced by air with low moisture such that freezing can be prevented.

According to the present invention, a blowdown valve such as a drain valve 51 and a purge valve 52 are closed when the fuel cell 11 stops generating electricity. As a result, the pressure inside the anode gas circulation pipe 46 decreases naturally as time passes. Therefore, by opening the purge valve 52 (or the drain valve 51) after a predetermined amount of time has passed before water such as generated water remaining inside the anode gas circulation pipe 46 freezes, air can be pulled into the anode gas circulation pipe 46 from outside the fuel cell system 10. Due to this air flow, it is possible to move the moisture inside the anode gas circulation pipe 46 towards the fuel cell 11 side. In other words, water that was remaining near the purge valve 52 (drain valve 51) is removed. Therefore, it is possible to prevent the moisture from freezing near the purge valve 52 (drain valve 51). Therefore, a subsequent scavenging process, through which the interior of the anode gas circulation pipe 46 is replaced with air, can be performed reliably.

While a preferred embodiment of the present invention has been described above, it should be understood that these are exemplary of the invention and are not to be considered as limiting the present invention. Additions, omissions, substitutions, and other modifications can be made without departing from the scope of the present invention. The invention is not to be considered as being limited by the foregoing description, and is only limited by the scope of the appended claims.

For example, in the present embodiment, a configuration has been described in which the gas inside the anode gas circulation pipe 46 is forcibly exhausted by backspinning the air compressor 33 when the pressure inside the anode gas circulation pipe 46 is reduced, thereby making the pressure inside the anode gas circulation pipe 46 less than or equal to the atmospheric pressure. However, another configuration is possible in which, for example, an electric power consumption device 50 is used for the fuel cell 11 to generate electricity, then an anode gas remaining inside the anode gas circulation pipe 46 is forcibly consumed, thereby reducing the pressure inside the anode gas circulation pipe 46.
A fuel cell system comprising: an anode gas circulation path comprising an anode gas supplying path and an anode gas ejection path; a fuel cell; a blowdown valve; and a control unit controlling the blowdown valve, wherein the control unit comprises a freeze estimation unit estimating whether the anode gas circulation path is likely to freeze, a pressure reduction unit reducing a pressure of the anode gas circulation path, and a pressure condition confirmation unit confirming a pressure of the anode gas circulation path; and when the freeze estimation unit estimates a freezing when the fuel cell stops generating electricity, the blowdown valve is closed, a pressure of the anode gas circulation path is reduced by the pressure reduction unit, and, the blowdown valve is opened after the pressure condition confirmation unit confirms that a pressure of the anode gas circulation path reaches a predetermined pressure less than or equal to an atmospheric pressure, thereby moving a moisture inside the anode gas circulation path in a direction towards the fuel cell.

## Claims

1. A fuel cell system (10) comprising:
an anode gas circulation path (46) comprising an anode gas supplying path (23) and an anode gas ejection path (35), an anode gas flowing through the anode gas supplying path and the anode gas ejection path (23);
a fuel cell (11) configured to generate electricity by receiving a supply of the anode gas through the anode gas supplying path (23);
a blowdown valve (52) provided in the anode gas ejection path (35) for discharging anode gas to the outside; and
a control unit (45) configured to control the blowdown valve (52), wherein
the control unit (45) comprises a freeze estimation unit (61) configured to estimate whether the anode gas circulation path (46) is likely to freeze, a pressure reduction unit (62) configured to reduce a pressure of the anode gas circulation path (46), and a pressure condition confirmation unit (63) configured to confirm a pressure of the anode gas circulation path (46);
**characterized in that**
the fuel cell system (10) is configured such that,
when the freeze estimation unit (61) estimates a freezing when the fuel cell (11) stops generating electricity, the blowdown valve (52) is closed, a pressure of the anode gas circulation path (46) is reduced by the pressure reduction unit (62), and, the blowdown valve (52) is opened after the pressure condition confirmation unit (63) confirms that a pressure of the anode gas circulation path (46) reaches a predetermined pressure less than an atmospheric pressure, thereby introducing air via the blowdown valve (52) into the anode gas circulation path (46) for moving a moisture inside the anode gas circulation path (46) in a direction towards the fuel cell (11),
wherein the pressure reduction unit (62) is configured to drive a cathode gas supplying pump (33) in a backspin direction, the cathode gas supplying pump being connected to the anode gas circulation path (46).

## Patentansprüche

1. Brennstoffzellensystem (10), umfassend:
einen Anodengaszirkulationsweg (46), der einen Anodengaszuführweg (23) und einen Anodengasauswurfweg (35) aufweist, wobei Anodengas durch den Anodengaszuführweg und den Anodengasauswurfweg (23) fließt;
eine Brennstoffzelle (11), die konfiguriert ist, um durch Erhalt von Anodengaszufuhr durch den Anodengaszufuhrweg (23) Elektrizität zu erzeugen;
ein Abblasventil (52), das in dem Anodengasauswurfweg (35) vorgesehen ist, um Anodengas zur Außenseite abzuführen; und eine Steuereinheit (45), die konfiguriert ist, das Abblasventil (52) anzusteuern, worin
die Steuereinheit (45) eine Gefrierschätzeinheit (61) aufweist, die konfiguriert ist, um zu schätzen, ob der Anodengaszirkulationsweg (46) wahrscheinlich gefriert, eine Druckreduktionseinheit (62), die konfiguriert ist, um einen Druck des Anodengaszirkulationswegs (46) zu reduzieren, und eine Druckzustandprüfeinheit (63), die konfiguriert ist, um einen Druck des Anodengaszirkulationswegs (46) zu prüfen;
**dadurch gekennzeichnet, dass** das Brennstoffzellensystem (10) derart konfiguriert ist, dass
wenn die Gefrierschätzeinheit (61) ein Gefrieren schätzt, wenn die Brennstoffzelle (11) die Stromerzeugung stoppt, das Abblasventil (52) geschlossen wird, ein Druck des Anodengaszirkulationswegs (46) durch die Druckreduktionseinheit (62) reduziert wird, und das Abblasventil (52) geöffnet wird, nachdem die Druckzustandprüfeinheit (63) feststellt, dass ein Druck des Anodengaszirkulationswegs (46) einen vorbestimmten Druck erreicht, der niedriger als Atmosphärendruck ist, um hierdurch Luft über das Abblasventil (52) in den Anodengaszirkulationsweg (46) einzuleiten, um Feuchtigkeit innerhalb des Anodengaszirkulationswegs (46) in Richtung zur Brennstoffzelle (11) hin zu bewegen,
worin die Druckreduktionseinheit (62) konfiguriert ist, um eine Kathodengaszufuhrpumpe (33) in rücklaufender Richtung anzutreiben, wobei die Kathodengaszuführpumpe mit dem Anodengaszirkulationsweg (46) verbunden ist.

## Revendications

1. Système de pile à combustible (10), comprenant:
un chemin de circulation de gaz anodique (46) comprenant un chemin d'alimentation de gaz anodique (23) et un chemin d'éjection de gaz anodique (35), un gaz anodique s'écoulant à travers le chemin de fourniture de gaz anodique et le chemin d'éjection de gaz anodique (23);
une pile à combustible (11) configurée pour générer de l'électricité en recevant une alimentation en gaz anodique à travers le chemin de fourniture de gaz anodique (23);
une vanne de purge (52) prévue dans le chemin d'éjection de gaz anodique (35) pour décharger le gaz anodique vers l'extérieur; et
une unité de commande (45) configurée pour commander la vanne de purge (52),
dans lequel l'unité de commande (45) comprend une unité d'estimation de gel (61) configurée pour estimer si le chemin de circulation de gaz anodique (46) est sur le point de geler, une unité de réduction de pression (62) configurée pour réduire une pression du chemin de circulation de gaz anodique (46), et une unité de confirmation de condition de pression (63) configurée pour confirmer une pression du chemin de circulation de gaz anodique (46);
**caractérisé en ce que**:
le système de pile à combustible (10) est configuré de telle sorte que, lorsque l'unité d'estimation de gel (61) estime une condition de gel lorsque la pile à combustible (11) cesse de générer de l'électricité, la vanne de purge (52) est fermée, une pression du chemin de circulation de gaz anodique (46) est réduite par l'unité de réduction de pression (62), et la vanne de purge (52) est ouverte une fois que l'unité de confirmation de condition de pression (63) a confirmé qu'une pression du chemin de circulation de gaz anodique (46) a atteint une pression prédéterminée inférieure à une pression atmosphérique, introduisant de ce fait de l'air par l'intermédiaire de la vanne de purge (52) dans le chemin de circulation de gaz anodique (46) afin de déplacer l'humidité à l'intérieur du chemin de circulation de gaz anodique (46) dans une direction vers la pile à combustible (11),
dans lequel l'unité de réduction de pression (62) est configurée de manière à entraîner une pompe de fourniture de gaz cathodique (33) dans une direction de rotation arrière, la pompe d'alimentation de gaz cathodique étant connectée au chemin de circulation de gaz anodique (46).
